# FASCICULE DE BREVET EUROPEEN

(11) **EP 3 609 729 B1**
(45) Date de publication et mention de la délivrance du brevet: **28.04.2021**
(21) Numéro de dépôt: 18713332.7
(22) Date de dépôt: 12.03.2018
(51) Int. Cl.: B60K 15/04

(54) **ENSEMBLE DE DEUX RESERVOIRS DE FLUIDE AVEC GOULOTTES SOLIDARISEES**
ANORDNUNG VON ZWEI FLUIDBEHÄLTERN MIT BEFESTIGTEN ROHREN
ASSEMBLY OF TWO FLUID TANKS WITH SECURED PIPES

(30) Priorité: 13.04.2017 FR 1753237
(43) Date de publication de la demande: 19.02.2020
(73) Titulaire: PSA Automobiles SA, 78300 Poissy (FR)
(72) Inventeur: HUREAUX, Sebastien, 70200 Magny Danigon (FR); DROIT, Julien, 70000 Vaivre Et Montoille (FR)
(86) Numéro de dépôt international: PCT/FR2018/050575
(87) Numéro de publication internationale: WO 2018/189439

(56) Documents cités:
- EP-A1- 3 042 797
- CN-U- 204 055 333
- DE-A1-102016 208 534
- FR-A1- 3 034 052
- US-A1- 2010 012 205

## Description

L'invention porte sur un ensemble d'au moins deux réservoirs de fluides consommables pour véhicule automobile, l'ensemble comprenant un premier réservoir équipé d'une première goulotte de remplissage et un deuxième réservoir équipé d'une deuxième goulotte de remplissage. Chacune des goulottes est en connexion fluidique avec leur réservoir respectif et débouche dans une même zone de remplissage par des têtes de remplissage, la deuxième goulotte étant fixée au moins provisoirement à la première goulotte dans ou au voisinage de la zone de remplissage par une pièce de solidarisation.

En particulier, mais sans que cela soit limitatif, le premier réservoir de fluide peut être un réservoir de carburant et le deuxième réservoir peut être un réservoir d'agent réducteur pour un système de réduction catalytique sélective aussi dénommé système RCS, dénomination qui pourra être utilisée dans ce qui suit pour le désigner de même que pour désigner ses parties constitutives comme réservoir RCS pour le réservoir d'agent réducteur. Cependant, dans le domaine automobile, les réservoirs selon la présente invention, peuvent être tout autre type de réservoir contenant un fluide.

Donc, dans ce qui va suivre, il va être pris l'exemple d'un réservoir RCS pour décrire la présente invention. Ceci n'est pas limitatif et la présente invention peut concerner un ensemble de deux réservoirs solidarisés de n'importe quel fluide.

Par exemple, dans le cas non limitatif d'un réservoir d'agent réducteur RCS, il a été développé des goulottes de remplissage qui vont se loger par une petite trappe située sur la façade latérale du véhicule, ainsi que des réservoirs RCS situés en partie basse du soubassement du véhicule. Le réservoir RCS se trouve à proximité du réservoir de carburant mais surtout les entrées de leurs goulottes sont reçues dans une même trappe ou dans des trappes voisines. Comme les normes de dépollution deviennent de plus en plus strictes, le réservoir RCS est destiné à être rempli de plus en plus fréquemment.

En prenant toujours comme exemple un réservoir RCS, la plupart des véhicules Diesel fabriqués actuellement vont comporter au moins un réservoir RCS. La ou les tubulures se raccordant au réservoir, et au moins la goulotte de remplissage, peuvent être monoblocs avec le réservoir. Alternativement, elles peuvent être fabriquées indépendamment du réservoir et sont rapportées au réservoir ultérieurement, par une opération connue sous le terme de manchonnage.

Le réservoir RCS ainsi équipé est ensuite monté sur le véhicule, en usine terminale, par une opération dite de coiffage, consistant à déposer le réservoir et ses tubulures sur une platine, appelée également luge, disposée sous le soubassement du véhicule, puis à monter l'ensemble sur le véhicule. C'est le cas aussi du réservoir de carburant. Lors de l'opération de préparation sur luge, la tubulure RCS est montée encliquetée sur le réservoir RCS. Il en va de même pour le réservoir de carburant.

Par exemple, pour un véhicule de tourisme, le réservoir RCS contenant l'agent réducteur peut avoir une capacité de 10 à 20 litres, alors que le réservoir de carburant a au moins une capacité deux fois plus grande. Les goulottes de remplissage sont dimensionnées également en conséquence. Comme précédemment mentionné, il est fréquemment prévu d'implanter les réservoirs de carburant et RCS dans le véhicule de façon à ce que leurs goulottes de remplissage respectives débouchent dans la même zone, au niveau de la trappe de remplissage du véhicule, de façon à n'avoir qu'une seule trappe de remplissage, aisément accessible, pour les deux types de fluide.

Dans cette configuration, il a été observé un risque accru de casse, ou à tout le moins d'affaissement, de la goulotte de remplissage du réservoir RCS lors de l'opération de coiffage simultané des deux réservoirs, du fait, notamment, de sa faible résistance du fait de son faible dimensionnement.

Le document FR-A-3 034 052 décrit un ensemble de deux réservoirs de fluide, dont une goulotte est fixée à une autre goulotte dans la zone de remplissage par des moyens de fixation comprenant une première partie fixée sur la première goulotte et reliée solidairement à une deuxième partie en forme de pince venant enserrer la deuxième goulotte sur la moitié de son pourtour. La partie en forme de pince a une forme en C et s'encliquète en force sur le pourtour de la deuxième goulotte.

La solidarisation des deux goulottes proposées dans ce document est relativement compliquée et requiert de nombreux éléments. Cette solidarisation est relativement difficile à obtenir du fait que l'on doit complètement enserrer une portion de la goulotte de carburant dans la pince et donc faire le tour de cette portion. La pose d'une telle pièce de solidarisation n'est donc pas simple et requiert un temps de montage non négligeable.

Par conséquent, le problème à la base de la présente invention est, pour un ensemble de deux réservoirs de fluides consommables comprenant chacun une goulotte raccordée au pourtour extérieur du réservoir d'obtenir un maintien d'une des goulottes de remplissage d'un réservoir de fluide consommable par l'autre goulotte de remplissage se trouvant au voisinage d'un autre réservoir de fluide consommable également équipé d'une goulotte de remplissage, maintien qui soit aisé de mise en œuvre et résistant en position.

Pour atteindre cet objectif, il est prévu selon l'invention un ensemble d'au moins deux réservoirs de fluides consommables pour véhicule automobile, l'ensemble comprenant un premier réservoir équipé d'une première goulotte de remplissage et un deuxième réservoir équipé d'une deuxième goulotte de remplissage, chacune en connexion fluidique avec leur réservoir respectif et débouchant dans une même zone de remplissage par des têtes de remplissage, la deuxième goulotte étant fixée au moins provisoirement à la première goulotte dans ou au voisinage de la zone de remplissage par une pièce de solidarisation, caractérisé en ce que la pièce de solidarisation est en forme de W avec deux branches d'extrémité et deux branches internes respectivement associées à une branche d'extrémité, la première goulotte étant logée entre une première branche d'extrémité et une première branche interne adjacente et la deuxième goulotte étant logée entre une deuxième branche d'extrémité et une deuxième branche interne adjacente, la pièce de solidarisation étant fixée avec les première et deuxième goulottes en au moins un point de solidarisation respectif.

L'effet technique est d'obtenir une retenue pour la deuxième goulotte de remplissage à l'aide de le première goulotte avantageusement plus ferme en position car plus robuste et plus large. La première goulotte est alors utilisée en terme de support et d'appui pour la deuxième goulotte au moins lors de la phase de montage de l'ensemble sur véhicule.

Par forme en W, il est entendu diverses formes pour lesquelles on peut reconnaître quatre branches dont deux branches d'extrémité et deux branches internes. La forme en W n'est pas forcément symétrique, une partie en V du W pouvant être plus haute que l'autre partie en V du W. De même, les branches ne sont pas forcément rectilignes mais peuvent aussi être arrondies. Comme une première goulotte peut être plus large que la deuxième goulotte, il est donc possible que la forme en W soit déséquilibrée d'un côté.

Avantageusement, les première et deuxième goulottes sont cylindriques, avec la première goulotte d'un diamètre supérieur à la deuxième goulotte, au moins la première branche interne en vis-à-vis de la première goulotte présentant une forme arrondie enveloppant moins de la moitié de la périphérie de la première goulotte.

Il s'ensuit que la pièce de solidarisation ne forme plus une pince entourant complètement la première goulotte comme illustré dans l'état de la technique le plus proche. La forme arrondie est présente pour assurer un meilleur entourage partiel de la première goulotte. La mise en position de la pièce de solidarisation selon la présente invention est plus simple que la mise en position d'une pince.

Avantageusement, la première branche d'extrémité et la première branche interne associée à la première goulotte sont de longueur ou de périphérie plus élevée que celles de la deuxième branche d'extrémité et de la deuxième branche interne associées à la deuxième goulotte, la forme en W étant dissymétrique. Ceci est dû à une section plus grande de la première goulotte que la section de la deuxième goulotte.

Avantageusement, la branche d'extrémité associée à la deuxième goulotte est fixée sur la deuxième goulotte par au moins deux points de fixation, les fixations étant des vis, des rivets ou des points de soudure ou de colle. Ceci peut être fait préalablement au montage et la deuxième goulotte peut être menée déjà ainsi montée au poste de montage, ce qui simplifie les opérations de montage.

Avantageusement, la première goulotte comprend un plot faisant saillie vers la première branche interne associée à la première goulotte, un moyen de fixation reliant le plot à la pièce de solidarisation en traversant la première branche interne associée. Le plot de centrage, avantageusement en matière plastique, a pour fonction de garantir la tenue de la deuxième goulotte sur la première goulotte, ceci avant montage de l'ensemble par coiffage sur le véhicule automobile.

Avantageusement, la première goulotte présente une langue de largeur décroissante plus la langue s'éloigne de la première goulotte, l'extrémité libre de la langue étant recourbée pour pénétrer dans une lumière portée par une portion d'extrémité libre de la première branche d'extrémité associée à la première goulotte, l'extrémité libre de la langue étant sous forme d'un doigt réalisant un crochet d'encliquetage.

Ceci assure une solidarisation de la pièce de solidarisation avec une portion de la première goulotte, un centrage préalable de la pièce de solidarisation étant assuré par le plot. Au niveau de la pièce de solidarisation en forme de W, l'association du crochet d'encliquetage dans la lumière, avantageusement sous forme d'une encoche carrée, en supplément du plot de centrage assure donc la tenue mais aussi le bon positionnement en géométrie des première et deuxième goulottes entre elles, ceci avant au moins avant montage sur le véhicule. D'un point de vue mécanique, le crochet positionné dans son encoche supprime cinq degrés de liberté. La rotation restante est assurée par le plot de centrage, avantageusement plastique, quand non traversé par un moyen de fixation.

Avantageusement, la portion d'extrémité libre de la première branche d'extrémité associée à la première goulotte est recourbée d'environ 60 à 100° par rapport au reste de la première branche d'extrémité en formant un coude, le coude étant intercalé en dessous de la langue de forme incurvée en servant de support pour la langue vers le milieu de sa longueur. Un support de la première goulotte est assuré par la pièce de solidarisation au voisinage d'une de ses extrémités destinée à être fixée à un renfort de caisse. Le maintien de la première goulotte dans le véhicule est ainsi renforcé.

L'invention concerne aussi un procédé de montage d'un ensemble d'au moins deux réservoirs de fluides consommables sur un véhicule automobile, caractérisé en ce que l'ensemble est tel que décrit précédemment et qu'il est procédé au pré-assemblage de la deuxième goulotte du deuxième réservoir avec la première goulotte du premier réservoir par fixation séparée de chacune des première et deuxième goulottes avec une pièce de solidarisation, ce pré-assemblage étant suivi du montage de l'ensemble sur le véhicule.

Sur la ligne de montage, l'opérateur n'a plus qu'une manipulation à faire : fixer la pièce de solidarisation sur une partie du véhicule automobile, par exemple un renfort de caisse ou le châssis. Les autres opérations de solidarisation, à savoir la fixation de la pièce de solidarisation avec la deuxième goulotte ou la première goulotte, peuvent avoir été faites préalablement et l'ensemble des réservoirs peut avoir été amené ainsi préalablement monté au poste de montage.

Le point de fixation unique des première et deuxième goulottes sur caisse a pour but de n'avoir à visser qu'une seule vis au lieu de plusieurs comme le prévoyait l'état de la technique le plus proche. Ce vissage unique a l'avantage de réduire le temps de vissage en bord de ligne et, de plus, apporte un gain d'une vis coté en fourniture en bord de ligne. Il y a donc un gain de temps et un gain de matériel. Le procédé de montage de l'ensemble peut se faire en conservant les mêmes éléments d'aide au montage, par exemple un dispositif de posage déjà utilisé par l'état de la technique, comme une luge.

La présente invention concerne aussi un véhicule automobile, caractérisé en ce qu'il comprend un tel ensemble d'au moins deux réservoirs de fluides consommables, la pièce de solidarisation étant fixée sur une portion du renfort de caisse du véhicule automobile par un moyen de fixation amovible traversant une portion d'extrémité libre d'une branche d'extrémité de la pièce de solidarisation. Les goulottes présentent leur orifice d'entrée l'un à côté de l'autre et les orifices peuvent être logés dans une même trappe, ce qui est une simplification de l'alimentation en deux fluides consommables.

Avantageusement, un premier réservoir est un réservoir de carburant et un deuxième réservoir est un réservoir d'agent réducteur pour une réduction catalytique sélective. Ceci est une application préférentielle, l'utilisation d'agent réducteur, notamment de l'urée, principalement sous forme d'un mélange connu sous la dénomination d'AdBlue®, étant en pleine expansion. La goulotte du réservoir RCS, en tant que deuxième goulotte, est plus petite et fragile que la goulotte de carburant, en tant que première goulotte, et est ainsi protégée du fléchissement par sa solidarisation indirecte avec la goulotte de carburant via la pièce de solidarisation. Des dimensions non limitatives des goulottes seront ultérieurement données à titre d'exemple.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un ensemble de deux réservoirs de fluides avec des goulottes débouchant dans une trappe de remplissage de fluides d'un véhicule automobile, la présente invention pouvant s'appliquer sur un tel ensemble,
- la figure 2 est une vue en perspective des deux goulottes de réservoirs de fluide solidarisées par une pièce de solidarisation en formant un ensemble selon la présente invention,
- la figure 3 est une représentation en perspective agrandie par rapport à la figure 2 des portions d'extrémité des deux goulottes d'un ensemble selon la présente invention sous un autre ange de vue que la figure 2, la pièce de solidarisation ayant été omise à cette figure pour laisser apparaître les moyens de solidarisation portés par les deux goulottes avec la pièce de solidarisation,
- les figures 4 et 6 sont des vues en perspective selon divers angles des goulottes d'un ensemble de deux réservoirs de fluides conformément à la présente invention,
- la figure 7 est une coupe transversale schématique des deux goulottes reliées par une pièce de solidarisation en W, les deux goulottes faisant partie d'un ensemble selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Dans ce qui va suivre, on comprend les termes « supérieur », « inférieur », et autres références à des positionnements spatiaux en référence aux composants positionnés dans leur position de fonctionnement et d'usage normal, notamment quand les goulottes sont disposées en grande partie verticalement dans un véhicule automobile se trouvant sur un plan horizontal, l'entrée des goulottes se trouvant à un niveau plus haut que le réservoir associé.

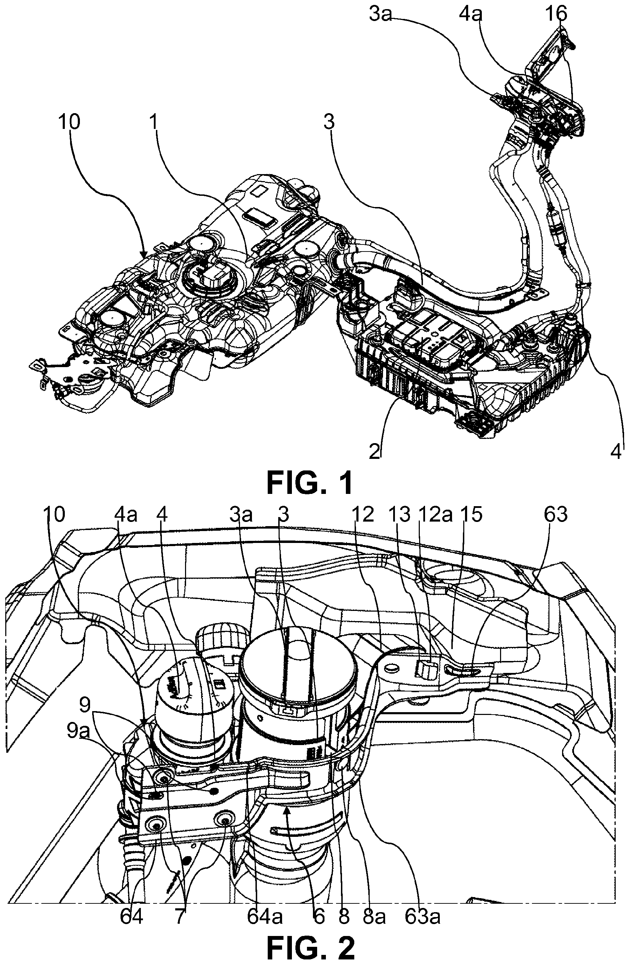

En se référant aux figures 1 à 7, la présente invention concerne un ensemble 10 d'au moins deux réservoirs 1, 2 de fluides consommables pour véhicule automobile. Comme notamment visible à la figure 1, l'ensemble 10 comprend un premier réservoir 1 équipé d'une première goulotte 3 de remplissage et un deuxième réservoir 2 équipé d'une deuxième goulotte 4 de remplissage. Chacune des goulottes 3, 4 est en connexion fluidique avec leur réservoir respectif 1, 2 et débouche dans une même zone de remplissage par des têtes de remplissage 3a, 4a logées dans une trappe 16 de remplissage.

La deuxième goulotte 4, très fréquemment la goulotte dont la largeur ou le diamètre est plus petit que la première goulotte 3, est fixée au moins provisoirement à la première goulotte 3 dans ou au voisinage de la zone de remplissage par une pièce de solidarisation 6. Ceci peut se faire uniquement lors du montage des réservoirs 1, 2 sur le véhicule automobile mais peut perdurer après montage pour assurer une solidarisation entre goulottes et un maintien de la deuxième goulotte 4 par la première goulotte 3 de section plus grande.

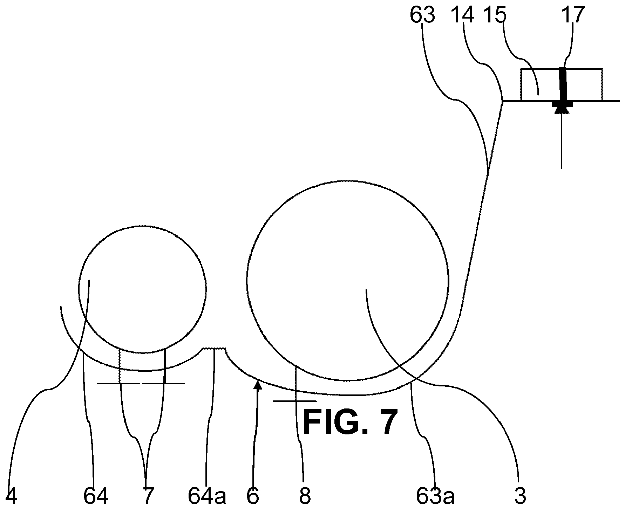

Selon l'invention, comme il est visible à la figure 7, la pièce de solidarisation 6 est en forme de W. Cette forme en W n'est pas forcément symétrique et peut être très déformée. La forme en W comprend deux branches d'extrémité 63, 64 et deux branches internes 63a, 64a respectivement associées à une branche d'extrémité 63, 64.

La première goulotte 3 est logée entre une branche d'extrémité 63, 64 et sa branche interne adjacente réalisant un V de la forme en W et la deuxième goulotte 4 est logée entre l'autre branche d'extrémité 63, 64 et sa branche interne adjacente formant l'autre V de la forme en W, forme aussi appelée pontet. Comme la première goulotte 3 est généralement de section plus grande que la deuxième goulotte 4, il est fréquent que les deux V ainsi formés ne soient pas symétriques.

La pièce de solidarisation 6 est fixée respectivement avec les première et deuxième goulottes 3, 4 en au moins un point de solidarisation respectif 7, 8, 9. Cette ou ces fixations peuvent être avantageusement amovibles. Il n'est pas nécessaire de solidariser directement les goulottes 3, 4 entre elles, la pièce de solidarisation 6 le faisant indirectement. Ceci est avantageux car les parois des goulottes 3, 4 ne risquent pas ainsi d'être endommagées.

Comme il est notamment visible aux figures 2 à 6, les première et deuxième goulottes 3, 4 peuvent être cylindriques, avec la première goulotte 3 d'un diamètre supérieur à la deuxième goulotte 4. Au moins la branche interne en vis-à-vis de la première goulotte 3, c'est-à-dire de la goulotte ayant la section la plus grande, peut présenter une forme arrondie enveloppant moins de la moitié de la périphérie de la première goulotte 3.

Comme la première goulotte 3 est de section plus grande que la deuxième goulotte 4, en pouvant par exemple être le double de celle de la deuxième goulotte 4, la branche d'extrémité 63, 64 dite première branche d'extrémité 63 et la branche interne dite première branche interne 63a associée à la première goulotte 3 peuvent être de longueurs pour des branches rectilignes ou de périphéries pour des branches arrondies plus élevées que celles respectivement de la deuxième branche d'extrémité 64 et de la deuxième branche interne 64a associées à la deuxième goulotte 4. La forme en W est alors dissymétrique, ce qui entre dans le cadre de la présente invention et est le plus fréquent.

Comme il peut être visible aux figures 2 à 6, la deuxième branche d'extrémité 64 associée à la deuxième goulotte 4 est fixée sur la deuxième goulotte 4 par au moins deux points de fixation 7, les fixations étant des vis, des rivets ou des points de soudure ou de colle. Il est préféré des fixations amovibles comme des vis.

Notamment à la figure 2, il existe trois points de fixation avec la deuxième branche d'extrémité 64 associée à la deuxième goulotte 4 plane et la deuxième branche interne 64a adjacente à cette deuxième branche d'extrémité 64 de longueur réduite comparée à celle de la première branche d'extrémité 63 associée, cette deuxième branche interne 64a pointant vers la première goulotte 3. La deuxième branche d'extrémité 64 peut aussi être arrondie comme montré à la figure 7.

La deuxième branche d'extrémité 64 associée à la deuxième goulotte 4 peut être plane et de largeur plus grande que les autres branches de la forme en W pour un meilleur appui de cette deuxième branche d'extrémité 64 contre la deuxième goulotte 4. La deuxième branche d'extrémité 64 peut présenter deux trous ronds ou oblongs 9a destinés respectivement un téton de positionnement 9 porté par la deuxième goulotte 4, ces trous ronds ou oblongs 9a étant bien visibles à la figure 2 avec un de ces trous référencé.

Toujours en se référant plus particulièrement aux figures 2 à 6, la première goulotte 3 peut comprendre un plot 8 faisant saillie vers la première branche interne 63a associée à la première goulotte 3. Un moyen de fixation 8a peut relier le plot 8 à la pièce de solidarisation 6 en traversant la première branche interne 63a associée, la tête du moyen de fixation 8a se trouvant sur la face de la première branche interne 63a. Ceci n'est pas obligatoire et le plot 8 peut n'être qu'un plot de maintien sans fixation de la première goulotte 6 sur la pièce de solidarisation par la première branche interne 63a.

Lors du procédé de montage, la pièce de solidarisation 6 en forme de W est livrée montée et vissée pas trois vis 7 sur la deuxième goulotte 4, par exemple une goulotte RCS et vient se clipper sur la portion d'extrémité de tête de la première goulotte 3, par exemple la goulotte à carburant via le plot 8, avantageusement cylindrique et en plastique.

La première goulotte 3 peut présenter une langue 12 de largeur décroissante plus la langue 12 s'éloigne de la première goulotte 3. L'extrémité libre de la langue 12 peut être recourbée pour pénétrer dans une lumière 13 portée par une portion d'extrémité libre de la première branche d'extrémité 63 associée à la première goulotte 3 et servant de boutonnière pour la portion d'extrémité libre de la première branche d'extrémité 63 sous forme d'un doigt 12a réalisant un crochet d'encliquetage.

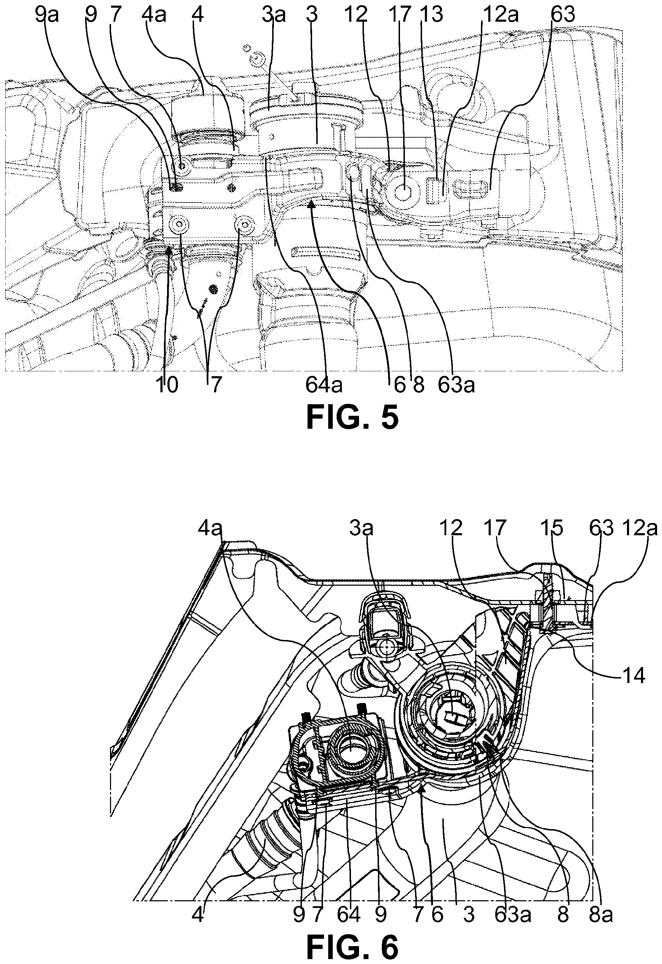

La portion d'extrémité libre de la première branche d'extrémité 63 associée à la première goulotte 3 est recourbée d'environ 60 à 100° par rapport au reste de la première branche d'extrémité 63 en formant un coude 14. Le coude 14 peut être intercalé en dessous de la langue 12 de forme incurvée en servant de support pour la langue 12 vers le milieu de sa longueur. Le coude 14 est particulièrement bien visible aux figures 6 et 7.

L'invention concerne aussi un procédé de montage d'un ensemble 10 d'au moins deux réservoirs 1, 2 de fluides consommables sur un véhicule automobile, l'ensemble 10 étant tel que décrit précédemment. Dans ce procédé, il est effectué un pré-assemblage de la deuxième goulotte 4 du deuxième réservoir 2 avec la première goulotte 3 du premier réservoir 1 par fixation séparée de chacune des première et deuxième goulottes 3, 4 avec une pièce de solidarisation 6. Ce pré-assemblage est suivi du montage de l'ensemble 10 sur le véhicule. Ce pré-assemblage peut être conservé une fois l'ensemble 10 monté et perdurer pendant la vie du véhicule automobile.

Au montage, il peut seulement être effectué le seul point de vissage de la pièce de solidarisation 6 avec le renfort de caisse du véhicule, donc une seule opération pour un opérateur, les première et deuxième goulottes 3, 4 pouvant être liées entre elles avant le coiffage sur caisse et l'ensemble 10 se fixant en un tout à la caisse du véhicule automobile.

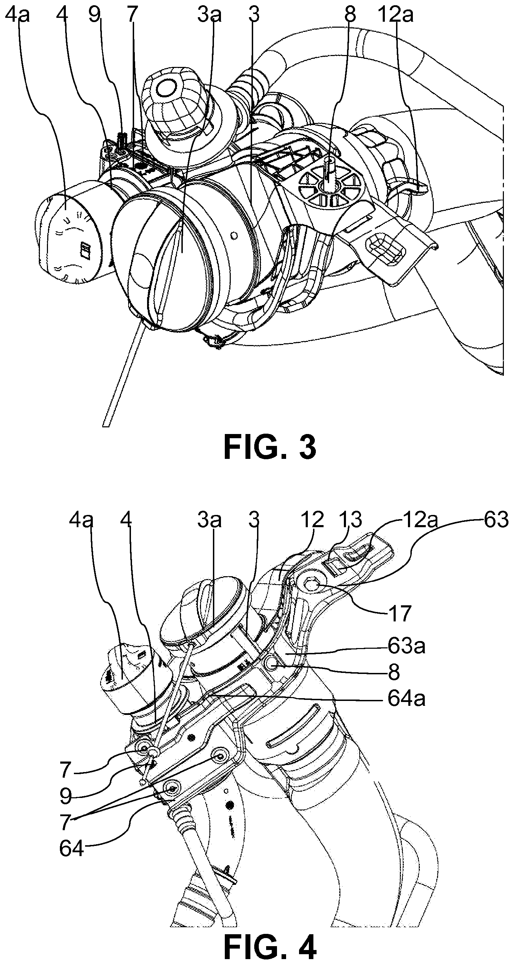

L'invention concerne enfin un véhicule automobile avec un tel ensemble 10 d'au moins deux réservoirs 1, 2 de fluides consommables. La pièce de solidarisation 6 est fixée sur une portion du renfort de caisse 15 du véhicule automobile par au moins un moyen de fixation 7 amovible traversant une portion d'extrémité libre d'une branche d'extrémité 63, 64 de la pièce de solidarisation 6, avantageusement la portion d'extrémité de la première branche d'extrémité 63. Le moyen de fixation 17 est particulièrement bien visible aux figures 4 à 7.

Sans que cela soit limitatif, dans une application préférentielle de la présente invention, un premier réservoir 1 peut être le réservoir de carburant et le deuxième réservoir 2 peut être le réservoir d'agent réducteur pour une réduction catalytique sélective, le réservoir de carburant étant de plus grande contenance que le réservoir d'agent réducteur ou réservoir RCS.

L'invention concerne enfin un véhicule automobile comprenant un tel ensemble 10 d'au moins deux réservoirs 1, 2 de fluides consommables, la pièce de solidarisation 6 étant fixée sur une portion du renfort de caisse 15 du véhicule automobile par au moins un moyen de fixation 17 amovible traversant une portion d'extrémité libre d'une branche d'extrémité 63, 64 de la pièce de solidarisation 6. Cette portion d'extrémité libre est avantageusement la première branche d'extrémité 63 associée à la première goulotte 3.

Ce vissage unique a l'avantage de réduire le temps de vissage en bord de ligne et procure de plus un gain d'une vis coté fourniture en bord de ligne de montage. Après l'opération de coiffage sur véhicule des première et deuxième goulottes 3, 4, la pièce de solidarisation 6 en forme de W, avantageusement en tôle, qui a été montée vissée sur la deuxième goulotte 4 vient s'insérer en dessous de la langue 12 de fixation, avantageusement en PEHD, de la première goulotte 3 et le renfort de la caisse 15. Un écrou, non montré aux figures, serti dans le corps creux de la structure de renfort de caisse 15 peut être prévu pour recevoir la vis de serrage en tant que moyen de fixation 17.

Comme précédemment mentionné, le premier réservoir 1 peut être le réservoir de carburant et le deuxième réservoir 2 peut être le réservoir d'agent réducteur pour une réduction catalytique sélective. Pour ordre d'idée sans que cela soit limitatif, une goulotte RCS de remplissage présente un diamètre extérieur de 25,5mm et est en polyéthylène haute densité extrudé ou PEHD. Un conduit de dégazage RCS, de diamètre extérieur de 10mm en polyéthylène haute densité extrudé peut aussi être présent. Une goulotte à carburant peut être en PEHD et présenter un diamètre de 40mm. La goulotte à carburant étant plus robuste, cette dernière est donc utilisée en terme de support et d'appui pour la goultotte RCS au moins dans la phase de montage.

L'invention n'est nullement limitée aux modes de réalisation décrits et illustrés qui n'ont été donnés qu'à titre d'exemples.

## Revendications

1. Ensemble (10) d'au moins deux réservoirs (1, 2) de fluides consommables pour véhicule automobile, l'ensemble (10) comprenant un premier réservoir (1) équipé d'une première goulotte (3) de remplissage et un deuxième réservoir (2) équipé d'une deuxième goulotte (4) de remplissage, chacune en connexion fluidique avec leur réservoir respectif (1, 2) et débouchant dans une même zone de remplissage par des têtes de remplissage (3a, 4a), la deuxième goulotte (4) étant fixée au moins provisoirement à la première goulotte (3) dans ou au voisinage de la zone de remplissage par une pièce de solidarisation (6), **caractérisé en ce que** la pièce de solidarisation (6) est en forme de W avec deux branches d'extrémité (63, 64) et deux branches internes (63a, 64a) respectivement associées à une branche d'extrémité (63, 64), la première goulotte (3) étant logée entre une première branche d'extrémité (63) et une première branche interne (63a) adjacente et la deuxième goulotte (4) étant logée entre une deuxième branche d'extrémité (64) et une deuxième branche interne (64a) adjacente, la pièce de solidarisation (6) étant fixée avec les première et deuxième goulottes (3, 4) en au moins un point de solidarisation respectif (7, 8, 9).

2. Ensemble (10) selon la revendication précédente, dans lequel les première et deuxième goulottes (3, 4) sont cylindriques, avec la première goulotte (3) d'un diamètre supérieur à la deuxième goulotte (4), au moins la première branche interne (63a) en vis-à-vis de la première goulotte (3) présentant une forme arrondie enveloppant moins de la moitié de la périphérie de la première goulotte (3).

3. Ensemble (10) selon la revendication précédente, dans lequel la première branche d'extrémité (63) et la première branche interne (63a) associée à la première goulotte (3) sont de longueur ou de périphérie plus élevée que celles de la deuxième branche d'extrémité (64) et de la deuxième branche interne (64a) associées à la deuxième goulotte (4), la forme en W étant dissymétrique.

4. Ensemble (10) selon l'une quelconque des revendications précédentes, dans lequel la deuxième branche d'extrémité (64) associée à la deuxième goulotte (4) est fixée sur la deuxième goulotte (4) par au moins deux points de fixation (7), les fixations étant des vis, des rivets ou des points de soudure ou de colle.

5. Ensemble (10) selon la revendication précédente, dans lequel la première goulotte (3) comprend un plot (8) faisant saillie vers la première branche interne (63a) associée à la première goulotte (3), un moyen de fixation (8a) reliant le plot (8) à la pièce de solidarisation (6) en traversant la première branche interne (63a) associée.

6. Ensemble (10) selon la revendication précédente, dans lequel la première goulotte (3) présente une langue (12) de largeur décroissante plus la langue (12) s'éloigne de la première goulotte (3), l'extrémité libre de la langue (12) étant recourbée pour pénétrer dans une lumière (13) portée par une portion d'extrémité libre de la première branche d'extrémité (63) associée à la première goulotte (3), l'extrémité libre de la langue (12) étant sous forme d'un doigt (12a) réalisant un crochet d'encliquetage.

7. Ensemble (10) selon la revendication précédente, dans lequel la portion d'extrémité libre de la première branche d'extrémité (63) associée à la première goulotte (3) est recourbée d'environ 60 à 100° par rapport au restede la première branche d'extrémité (63) en formant un coude (14), le coude (14) étant intercalé en dessous de la langue (12) de forme incurvée en servant de support pour la langue (12) vers le milieu de sa longueur.

8. Procédé de montage d'un ensemble (10) d'au moins deux réservoirs (1, 2) de fluides consommables sur un véhicule automobile, **caractérisé en ce que** l'ensemble (10) est selon l'une quelconque des revendications précédentes et qu'il est procédé au pré-assemblage de la deuxième goulotte (4) du deuxième réservoir (2) avec la première goulotte (3) du premier réservoir (1) par fixation séparée de chacune des première et deuxième goulottes (3, 4) avec une pièce de solidarisation (6), ce pré-assemblage étant suivi du montage de l'ensemble (10) sur le véhicule.

9. Véhicule automobile, **caractérisé en ce qu'**il comprend un ensemble (10) d'au moins deux réservoirs (1, 2) de fluides consommables selon l'une quelconque des revendications 1 à 7, la pièce de solidarisation (6) étant fixée sur une portion du renfort de caisse (15) du véhicule automobile par un moyen de fixation (17) amovible traversant une portion d'extrémité libre d'une branche d'extrémité (63) de la pièce de solidarisation (6).

10. Véhicule automobile selon la revendication précédente, dans lequel un premier réservoir (1) est un réservoir de carburant et un deuxième réservoir (2) est un réservoir d'agent réducteur pour une réduction catalytique sélective.

## Patentansprüche

1. Baugruppe (10) von mindestens zwei Behältern (1, 2) von Verbrauchsflüssigkeiten für ein Kraftfahrzeug, wobei die Anordnung (10) einen ersten Behälter (1) umfasst, der mit einem ersten Füllschacht (3) und einem zweiten Behälter (2) ausgestattet ist. ausgestattet mit einer zweiten Füllrutsche (4), die sich jeweils in Flüssigkeitsverbindung mit ihrem jeweiligen Vorratsbehälter (1, 2) befindet und über Füllköpfe (3a, 4a) in dieselbe Füllzone mündet, wobei die zweite Rutsche (4) zumindest vorübergehend befestigt ist zur ersten Rutsche (3)in oder in der Nähe der Füllzone durch einen Sicherungsteil (6), der **dadurch gekennzeichnet ist, dass** der Sicherungsteil (6) W-förmig ist, wobei zwei Endäste (63, 64) bzw. zwei innere Zweige (63a, 64a) zugeordnet sind mit einem Endzweig (63, 64), wobei der erste Schacht (3) zwischen einem ersten Endzweig (63) und einem
ersten benachbarten inneren Zweig (63a) benachbart ist und der zweite Schacht (4) zwischen einem zweiten Endzweig (4) untergebracht
ist (64) und einen benachbarten zweiten internen Zweig (64a), denSicherungsteil (6) wird mit der ersten und zweiten Rutsche (3, 4) an mindestens einem jeweiligen Sicherungspunkt (7, 8, 9) befestigt.

2. Baugruppe (10) gemäß dem vorhergehenden Anspruch, bei der die erste und die zweite Rutsche (3, 4) zylindrisch sind, wobei die erste Rutsche (3) einen Durchmesser größer als die zweite Rutsche (4) hat, mindestens der erste innere Zweig (63a) gegenüber der ersten Rutsche (3) mit einer abgerundeten Form, die weniger als die Hälfte des Umfangs der ersten Rutsche (3) umhüllt.

3. Baugruppe (10) gemäß dem vorhergehenden Anspruch, wobei der erste Endzweig (63) und der erste innere Zweig (63a), die der ersten Rutsche (3) zugeordnet sind, eine größere Länge oder einen größeren Umfang haben als diejenigen des zweiten Endzweigs (64) und des zweiten inneren Zweigs (64a) der der zweiten Rutsche (4) zugeordnet ist, wobei die W-Form asymmetrisch ist.

4. Baugruppe (10) gemäß einem der vorhergehenden Ansprüche, wobei der zweite Endast (64), der der zweiten Rutsche (4) zugeordnet ist, durch mindestens zwei Befestigungspunkte (7) an der zweiten Rutsche (4) befestigt ist,wobei die Befestigungselemente Schrauben, Nieten oder Schweiß- oder Klebepunkte sind.

5. Baugruppe (10) gemäß dem vorhergehenden Anspruch, bei der die erste Rutsche (3) einen Bolzen (8) umfasst, der in Richtung des ersten inneren Zweigs (63a) vorsteht, der der ersten Rutsche (3) zugeordnet ist, wobei eine Befestigungseinrichtung (8a) die Bolzen (8) zu dem Sicherungsteil (6), der durch den zugehörigen ersten inneren Zweig (63a) verläuft.

6. Anordnung (10) gemäß dem vorhergehenden Anspruch, bei der die erste Rutsche (3) eine Zunge (12) mit abnehmender Breite aufweist, wenn sich die Zunge (12) von der ersten Rutsche (3), dem freien Ende der Zunge (12) gekrümmt sein, um in ein Lumen (13) einzutreten, das von einem freien Endabschnitt des ersten Endastes (63) getragen wird, der der ersten Rutsche (3) zugeordnet ist, wobei das freie Ende der Zunge (12) die Form eines Fingers hat (12a) Herstellen eines Karabinerhakens.

7. Anordnung (10) gemäß dem vorhergehenden Anspruch, bei der der freie Endabschnitt des ersten Endastes (63), der der ersten Rutsche (3) zugeordnet ist, gegenüber dem Rest des ersten Endastes um ungefähr 60 bis 100° gekrümmt ist (63) Bilden eines Ellbogens (14), wobei der Ellbogen (14) unterhalb der Zunge (12) mit gekrümmter Form angeordnet ist und als Stütze für die Zunge (12) in Richtung der Mitte ihrer Länge dient.

8. Verfahren zum Montieren einer Anordnung (10) von mindestens zwei Behältern (1, 2) von Verbrauchsflüssigkeiten an einem Kraftfahrzeug, **gekennzeichnet dadurch, dass** die Anordnung (10) einem der vorhergehenden Ansprüche entspricht und dass die zweite Rutsche (4) des zweiten Tanks (2) ist mit der ersten Rutsche (3) des ersten Tanks (1) vormontiert, indem jeder der ersten und zweiten Rutschen (3, 4) separat mit einem Sicherungsteil (6) befestigt wird. Auf diese Vormontage folgt die Montage der Baugruppe (10) am Fahrzeug.

9. Kraftfahrzeug, **dadurch gekennzeichnet, dass** es eine Anordnung (10) von mindestens zwei Behältern (1, 2) von Verbrauchsflüssigkeiten nach einem der Ansprüche 1 bis 7 umfasst, wobei der Sicherungsteil (6) an einem Teil der Karosserie befestigt ist Verstärkung (15) des Kraftfahrzeugs
durch entfernbare Befestigungsmittel (17), die durch einen freien Endabschnitt eines Endastes (63) des Sicherungsteils (6) verlaufen.

10. Kraftfahrzeug nach dem vorhergehenden Anspruch, bei dem ein erster Tank (1) ein Kraftstofftank und ein zweiter Tank (2) ein Reduktionsmitteltank zur selektiven katalytischen Reduktion ist.

## Claims

1. Assembly (10) of at least two reservoirs (1, 2) of consumable fluids for a motor vehicle, the assembly (10) comprising a first reservoir (1) equipped with a first filling chute (3) and a second reservoir (2) equipped with
a second filling chute (4), each in fluid connection with their respective reservoir (1, 2) and opening into the same filling zone via filling heads (3a, 4a), the second chute (4) being fixed at least temporarily to the first chute (3) in or in the vicinity of the filling zone by a securing part (6), **characterized in that** the securing part (6) is W-shaped with two end branches (63, 64) and two internal branches (63a,
64a) respectively associated with an end branch (63, 64), the first chute (3) being housed between a first end branch (63) and a first internal branch (63a) adjacent and the second chute (4) being housed between a second end branch
(64) and an adjacent second internal branch (64a), the securing part (6) being fixed with the first and second chutes (3, 4) at least one respective securing point (7, 8, 9).

2. Assembly (10) according to the preceding claim, in which the first and second chutes (3, 4) are cylindrical, with the first chute (3) of a diameter greater than the second chute (4), at least the first internal branch (63a) facing the first chute (3) having a rounded shape enveloping less than half of the periphery of the first chute (3).

3. Assembly (10) according to the preceding claim, in which the first end branch (63) and the first internal branch (63a) associated with the first chute (3) are of greater length or periphery than those of the second branch end (64) and
the second branch inte r not (64a) associated with the second channel (4), the W-shape is asymmetrical.

4. Assembly (10) according to any one of the preceding claims, in which the second end branch (64) associated with the second chute (4) is fixed to the second chute (4) by at least two fixing points (7), the fasteners being screws, rivets or welding or glue points.

5. Assembly (10) according to the preceding claim, in which the first chute (3) comprises a stud (8) projecting towards the first internal branch
(63a) associated with the first chute (3), a fixing means (8a) connecting the stud (8) to the securing part (6) passing through the associated first internal branch (63a).

6. Assembly (10) according to the preceding claim, in which the first chute (3) has a tongue (12) of decreasing width as the tongue (12) moves away from the first chute (3), the free end of the tongue (12) being curved to enter a lumen
(13) carried by a free end portion of the first end branch (63) associated with the first chute (3), the free end of the tongue (12) being in the form of a finger (12a) producing a snap hook.

7. Assembly (10) according to the preceding claim, in which the free end portion of the first end branch (63) associated with the first chute (3) is curved by approximately 60 to 100° with respect to the rest of the first end branch
(63) forming an elbow (14), the elbow (14) being interposed below the tongue (12) of curved shape serving as support for the tongue (12) towards the middle of its length.

8. Method of mounting an assembly (10) of at least two reservoirs (1, 2) of consumable fluids on a motor vehicle, **characterized in that** the assembly (10) is according to any one of the preceding claims and that 'the second chute (4) of the second tank (2) is pre-assembled with the first chute (3) of the first tank (1) by separately fixing each of the first and second chutes (3, 4) with a securing part (6), this pre-assembly being followed by the assembly of the assembly (10) on the vehicle.

9. Motor vehicle, **characterized in that** it comprises an assembly (10) of at least two reservoirs (1, 2) of consumable fluids according to any one of claims 1 to 7, the securing part (6) being fixed to a portion of the body reinforcement (15) of the motor vehicle by removable fixing means (17) passing through a free end portion of an end branch (63) of the securing part (6).

10. Motor vehicle according to the preceding claim, in which a first tank (1) is a fuel tank and a second tank (2) is a reducing agent tank for selective catalytic reduction.
